(19) Europäisches Patentamt
European Patent Office
Office européen des brevets

(11) Veröffentlichungsnummer: **0 433 776 A2**

# (12) EUROPÄISCHE PATENTANMELDUNG

(21) Anmeldenummer: **90123367.6**

(22) Anmeldetag: **06.12.90**

(51) Int. Cl.$^5$: **C08G 18/08**, C08G 18/10, C08G 18/50, C08G 18/30

(30) Priorität: **19.12.89 DE 3941788**

(43) Veröffentlichungstag der Anmeldung: **26.06.91 Patentblatt 91/26**

(84) Benannte Vertragsstaaten: **AT BE CH DE DK ES FR GB IT LI NL SE**

(71) Anmelder: **BAYER AG**
**W-5090 Leverkusen 1 Bayerwerk(DE)**

(72) Erfinder: **Mayer, Eduard, Dr.**
**Pommernallee 18**
**W-4047 Dormagen(DE)**
Erfinder: **Dietrich, Manfred, Dr.**
**Dresdener Strasse 16**
**W-5090 Leverkusen(DE)**
Erfinder: **Meckel, Walter, Dr.**
**Zonser Strasse 9**
**W-4040 Neuss(DE)**

## (54) Verfahren zur Herstellung von schaumstoffhaltigen Polyurethan (harnstoff)-Massen.

(57) Die vorliegende Erfindung betrifft ein Verfahren zur Herstellung von vorgefertigten Schaumstoffen, vorzugsweise in stückiger Form, und gegebenenfalls weitere Füllstoffe, insbesondere Braunkohlenstaub, Magnetit und/oder Torf als Füllstoff enthaltenden, kationisch modifizierten, stückigen oder flächigen, die Füllstoffe abriebfest gebunden enthaltenden Polyurethan(harnstoff)-Massen mit einem sehr hohen Wasseraufnahmefähigkeitswert.

EP 0 433 776 A2

## VERFAHREN ZUR HERSTELLUNG VON SCHAUMSTOFFHALTIGEN POLYURETHAN(HARNSTOFF)-MASSEN

Die vorliegende Erfindung betrifft ein Verfahren zur Herstellung von vorgefertigten Schaumstoffen, vorzugsweise in stückiger Form, und gegebenenfalls weitere Füllstoffe, insbesondere Braunkohlenstaub, Magnetit und/oder Torf als Füllstoff enthaltenden, kationisch modifizierten, stückigen oder flächigen, die Füllstoffe abriebfest gebunden enthaltenden Polyurethan(harnstoff)-Massen mit einem sehr hohen Wasseraufnahmefähigkeitswert.

Es ist bereits bekannt, daß die Herstellung derartiger Materialien durch Umsetzung von vorzugsweise kationisch modifizierten NCO-Prepolymeren mit einer Funktionalität von mehr als 2,1 mit einer weit überstöchiometrischen Menge an Wasser in Gegenwart von zerkleinerten, vorgefertigten Schaumstoffen, insbesondere PU-Schaumstoffen, vorzugsweise zusätzlich Braunkohlenpulver, Magnetit und/oder Torf, gegebenenfalls in Gegenwart von weiteren anorganischen oder organischen Füllstoffen und gegebenenfalls in Gegenwart von Biomassen (lebenden Zellen, lebenden Bakterien, Enzymen) erfolgt.

Die entsprechenden Polyurethan(harnstoff)-Massen binden mittels mindestens 5 Gew.-% an Polyurethan(harnstoff)-Matrix bis zu 95 Gew.-% an vorgefertigten Schaumstoffteilchen und gegebenenfalls weiteren Füllstoffen vorzugsweise Braunkohle und/oder Torf in der füllstoffhaltigen Polyurethan(harnstoff)-Masse (Feststoff) und sind von der Herstellung her bereits gequollen bzw. stark wasserhaltig.

Ihr Wasseraufnahmefähigkeitswert (WAF) bei Suspendierung in Wasser beträgt 33 bis 97 Gew.-% Wasser entsprechend dem Stand der Technik, wie er z.B. aus EP 151 937 und EP 151 938 bekannt geworden ist.

Bei den in EP 151 937 bevorzugt verwendeten Bindemitteln zur Verklebung der Füllstoffe handelt es sich um kationisch modifizierte NCO-Prepolymere, bevorzugt auf der Basis von Polyethern, Verbindungen mit tertiärem Stickstoff (z.B.: N-Methyl-diethanolamin), Quaternierungsmittel (Dimethylsulfat, Polyphosphorsäure) und Diisocyanaten (z.B. TDI: Gemisch aus 2,4- und 2,6-Diisocyanatotoluol). Die resultierenden ionisch modifizierten NCO-Prepolymere enthalten die ionischen Partikel in fein dispergierter Form, was sich an der weißen Farbe des Prepolymeren zeigt. In der Praxis müssen die Herstellungsbedingungen sehr genau eingehalten werden, da sonst die dispergierten Partikel wegen Grobteiligkeit zur Sedimentation neigen und somit eine eingeschränkte Lagerstabilität aufweisen. Die Qualität der Polyurethan(harnstoff)-Massen, insbesondere das Abriebverhalten der verklebten Füllstoffe ist bei Verwendung von grobteiligen NCO-Prepolymeren erheblich verschlechtert.

Es wurde nun gefunden, daß man spezielle kationische Isocyanatprepolymere zur Herstellung hochgefüllter, stückiger, abriebfester, schaumstoffhaltiger Polyurethan(harnstoff)-Massen mit einem außerordentlich hohen Wasseraufnahmevermögen verwenden kann.

Die erfindungsgemäß zu verwendenden kationischen NCO-Prepolymere, die zur Herstellung der Polyurethan(harnstoff)-Massen als Bindemittel ihre Verwendung finden, weisen Eigenschaften auf, die bei der Herstellungsweise wie in EP 151 937 und EP 151 938 beschrieben, insbesonders in einer Reaktionsstufe, nicht erreichbar wären.

Gegenstand der Erfindung ist ein Verfahren zur Herstellung von schaumstoffhaltigen Polyurethan(harnstoff)-Massen aus Polyisocyanaten, Polyolen, kationische Gruppen tragenden Verbindungen, Füllstoffen, Wasser, Schaumstoffen und Kationengruppen tragenden NCO-Prepolymer-Bindemittel, welches dadurch gekennzeichnet ist, daß zum Aufbau dieser NCO-Prepolymere Kationengruppen enthaltende Semi-NCO-Prepolymere auf Basis von Polyisocyanaten und ganz oder teilweise quaternierten tertiären Stickstoff enthaltenden Polyolen propoxyliert mit 3 bis 8 Mol Propylenoxid pro Mol Stickstoff verwendet werden.

Überraschend wurde gefunden, daß durch die Verwendung von 3 bis 8 Mol Propylenoxid pro Mol tertiärer Stickstoffatome, Quarternierung und Umsetzung mit Polyisocyanaten zu Semi-NCO-Prepolymeren und nachfolgender Reaktion mit Polyolen in einem weiten Temperatur- und Verfahrensbereich transparente, lagerstabile NCO-Prepolymere enthalten werden, die die Füllstoffe abriebfest binden.

Als Ausgangsmaterialien für das erfindungsgemäße Verfahren werden im wesentlichen Materialien wie sie z.B. in EP 151 937 und 151 938 beschrieben sind, eingesetzt.

Für das erfindungsgemäße Verfahren sind z.B. die nachfolgenden Kationengruppen tragenden Verbindungen mit den allgemeinen Formeln A-D einsetzbar:

Formel A:

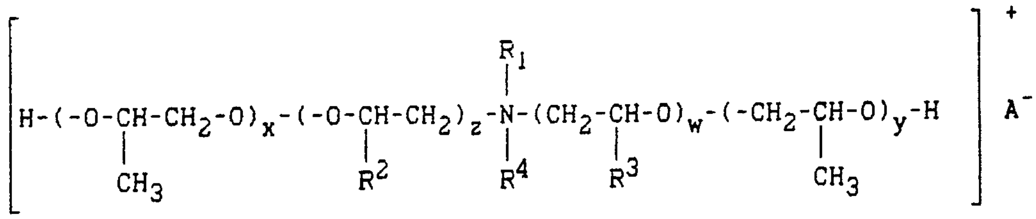

Formel B:

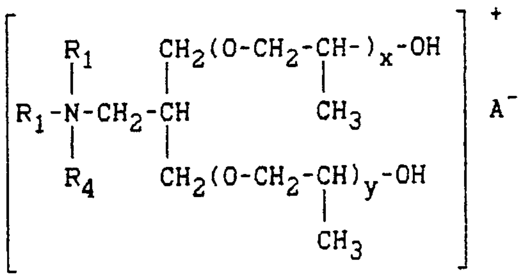

Formel C:

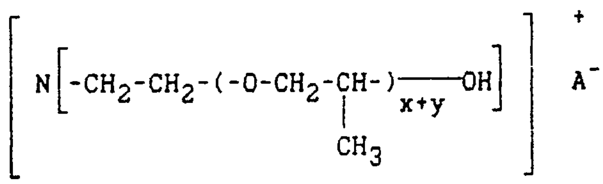

Formel D:

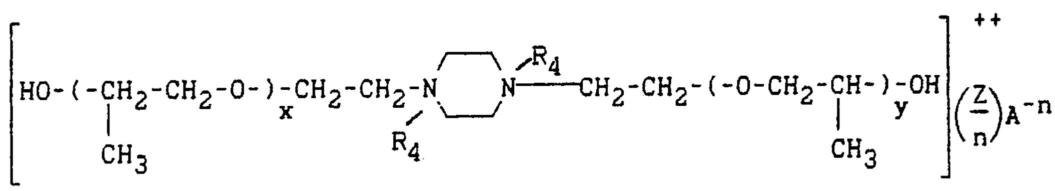

$R^1$ = Alkyl-(mit 1-25 C-Atomen), Benzyl-, Alkoxygruppen und
$R^2$, $R^3$ = H, $CH_3$
$R^4$ = Alkyl-, (mit 1-25 C-Atomen), Benzyl
$A^-$ beliebige Anionen (ggf. der Wertigkeit n, wobei $n \geqq 1$).
$0 \leqq (z+w) \leqq 2$
$3 \leqq (x+y) \leqq 8$
$5 \leqq (z+w+x+y) \leqq 10$

Als tertiäre Aminogruppen ausweisenden Polyole werden zur Propoxilierung z.B. verwendet; N-Methyldiethanolamin, N-Methyldiisopropanolamin oder N-Methyldipropanolamin, N,N-Dimethylaminomethylpropan-1,3-diol, Bishydroxy-ethylpiperazin, aber auch höherfunktionelle Verbindungen wie z.B. Triethanolamin.

Selbstverständlich können auch Mischungen dieser tertiäre Aminogruppen enthaltenden Verbindungen eingesetzt werden.

Die Überführung der propoxylierten tertiäre Aminogruppen enthaltenden Polyole in die entsprechenden Ammoniumverbindungen erfolgt durch übliche Alkylierungsmittel.

Selbstverständlich kann die Quaternierung vor der Propoxylierung erfolgen.

Als Alkylierungsmittel kommen beispielsweise in Frage: Methylchlorid, -bromid, Ethylchlorid, -bromid, Propylchlorid, -bromid, i-Propylchlorid, -bromid, n-Butylchlorid, -bromid, Isobutylchlorid, -bromid, Cyclohexylchlorid, -bromid, Octyl-, Nonyl-, Decyl-, Undecyl-, Dodecyl-chlorid und -bromid, Benzylchlorid, -bromid, Allylchlorid, -bromid, Dimethylsulfat, o,p-Toluolsulfonsäuremethylester, -ethylester, Ethylchlohydrin, Ethylenbromhydrin, Epichlorhydrin.

Selbstverständlich können auch Mischungen dieser Alkylierungsmittel eingesetzt werden.

Vorzugsweise werden o,p-Toluolsulfonsäuremethylester und/oder Benzylchlorid verwendet.

Sehr günstige Ergebnisse werden erreicht, wenn man einen geringen Teil des o,p-Toluolsulfonsäuremethylesters oder eines anderen Alkylierungsmittels oder Alkylierungsmittelgemischs des zur molaren Quaternierung notwendigen Quaternierungsmittels durch die Zugabe einer Säure wie z.B. p-Toluolsulfon- oder Phosphorsäure ersetzt, so daß die wäßrige Lösung des Ammoniumsalzes einen pH von bevorzugt $<7$ aufweist (1 g Salz/10 g Wasser).

Die quartäre Ammoniumgruppen enthaltenden propoxylierten Polyole werden dann mit Polyisocyanaten zu kationisch modifizierten Isocyanatprepolymeren umgesetzt.

Als Polyisocyanate werden di- und/oder polyfunktionelle Polyisocyanate eingesetzt, z.B. Hexandiisocyanat, Dicyclohexylmethandiisocyanat, Isophorondiisocyanat, bevorzugt jedoch aromatische Di- und Polyisocyanate, wie die Toluylendiisocyanat-Isomeren, Diphenylmethan-4,4'- und/oder 2,4'- und/oder 2,2'-Isomeren sowie gegebenenfalls die höhermolekularen Polyphenylpolymethylenpolyisocyanate, wie sie durch Phosgenierung von rohen Formaldehyd/Anilin-Kondensationsprodukten (Polyamingemischen) entstehen und als gegebenenfalls undestillierte Sumpfprodukte verwendet werden. Als Polyisocyanate können jedoch weiterhin alle bekannten Polyisocyanate zur Umsetzung benutzt werden, wie sie beispielsweise in der DE-OS 2 832 253 ausführlich aufgeführt werden.

Im letzten Schritt werden die kationisch modifizierten Isocyanatprepolymere mit höhermolekularen Polyhydroxylverbindungen zu Isocyanatprepolymeren, dem eigentlichen Bindemittel, umgesetzt. Die entstehenden NCO-Prepolymere weisen im allgemeinen eine NCO-Funktionalität von 2,1 bis 3,5, bevorzugt 2,2 bis 2,8 und einen NCO-Gehalt von 2,0 bis 12,0 Gew.-%, vorzugsweise 2,5 bis 8,0 Gew.-% auf.

Als höhermolekulare Polyhydroxylverbindungen werden die an sich bekannten Ausgangskomponenten eingesetzt mit Molekulargewichten von 400 bis 10.000, vorzugsweise 800 bis 8.000, zwei und/oder mehrfunktionelle Polyole mit Funktionalitäten $\leqq 2{,}1$ besser 2,5 (und bis ca. 5), vorzugsweise $\leqq 3{,}5$.

Als Polyhydroxylverbindungen werden Polyester, Polycarbonate, Polylactone und besonders bevorzugt die hydrolysestabileren di- und trifunktionellen Polyetherverbindungen verwendet.

Das erfindungsgemäße Verfahren wird im allgemeinen wie folgt durchgeführt:

I. Quaternierung (Salzbildung):

Die Überführung des mit 3 bis 8 Mol Propylenoxid propoxylierten tertiäre Aminogruppen enthaltenden Polyols oder Polyolgemischs in die entsprechenden Ammoniumverbindungen erfolgt durch Umsetzung mit dem Alkylierungsmittel/gemisch in Lösung, bevorzugt in Masse bei Temperaturen von 20 bis 180 °C, bevorzugt 40 bis 150 °C, besonders bevorzugt 50 bis 90 °C.

II. Kationisch modifiziertes Semi-Isocyanatprepolymer:

Die quaternierten, propoxylierten Polyole werden bei Temperaturen zwischen 40 bis 120 °C, bevorzugt 60 bis 100 °C, besonders bevorzugt zwischen 70 bis 95 °C mit Polyisocyanaten zu den kationisch modifizierten Isocyanatprepolymeren umgesetzt, die einen NCO-Gehalt von 5 bis 46,0 Gew.-%, bevorzugt 10 bis 40 %, besonders bevorzugt 30 bis 40 Gew.-% aufweisen.

III. Isocyanatprepolymer-Bindemittel

Die kationisch modifizierten Isocyanatprepolymere werden mit den höhermolekularen Polyhydroxylverbindungen in üblicher Weise z.B.: gemeinsames Erwärmen der Komponenten bei 50 bis 100 °C zu dem Isocyanatprepolymerbindemittel mit einem Isocyanatgehalt von 2 bis 12 Gew.-%, vorzugsweise 2,5 bis 8,0 Gew.-% und einer NCO-Funktionalität von 2,1 bis 3,5, bevorzugt 2,2 bis 2,8 umgesetzt. Im allgemeinen ist

die Menge an eingebauten kationischen Gruppen <2.000 mMol/kg Feststoff PU, bevorzugt 30 bis 1.500 mMol/kg und besonders bevorzugt 50 bis 500 mMol/kg PU-Feststoff.

Es muß als ausgesprochen überraschend bezeichnet werden, daß nur das geschilderte Dreistufenverfahren in Zusammenhang mit den speziellen propoxylierten Ammoniumsalzen zu klaren bis nur leicht trüben Isocyanatprepolymer-Bindemitteln führten.

Das erfindungsgemäße Verfahren ermöglicht somit

a) eine verbesserte Reproduzierbarkeit der Herstellung des NCO-Prepolymerbindemittels in einem breiten Temperatur- und Verfahrensbereich

b) die Herstellung eines transparenten sedimentationsstabilen NCO-Prepolymerbindemittels

c) erhebliche Lagerstabilitätsverbesserung

d) bei der Herstellung der PUR(harnstoff)-Massen eine verlängerte Pumpenlebensdauer durch eine geringere Verstopfungsgefahr aufgrund der sedimentations- und lagerstabilen NCO-Prepolymerbindemittel

e) die Einhaltung eines konstanten Eigenschaftsniveau der PUR(harnstoff)-Massen, insbesondere bezüglich abriebfest gebundener Füllstoffe.

Das erfindungsgemäße Verfahren soll anhand der folgenden Beispiele noch näher erläutert werden (Teile bedeuten Gew-Teile):

A) nicht erfindungsgemäße Einstufenverfahren:

Die 1 Stunde bei ca. 80 °C unter Vakuum entwässerte Mischung von 34,2 Tle. eines linearen hydrophoben Polyethers aus 1,2-Propandiol und Propylenoxid, OH-Zahl 56 und 41,8 Tle. eines verzweigten hydrophoben Polyethers, gestartet auf Trimethylolpropan mit 80 Teilen Propylenoxid und danach mit 20 Teilen Ethylenoxid umsetzt, OH-Zahl 35 und 1,5 Tle- N-Methyldiethanolamin wird auf ca. 60 °C abgekühlt und dann mit 20,2 Tle. TDI (Isomerengemisch 80:20 aus 2,4- und 2,6-Toluylendiisocyanat) umgesetzt. Sofort nach der Zugabe des gesamten TDI werden 2,3 Tle. o,p-Toluolsulfonsäuremethylester als Quaternierungsreagenz hinzugefügt. Die Reaktionstemperatursteigt auf 70-75 °C. Nach Erreichen des theoretischen NCO-Wertes erhält man ein trübes weißgefärbtes Prepolymer.

Nach dem oben beschriebenen Verfahren wurde das N-Methyldiethanolamin durch 1,85 g N-Methyl-di-(2-hydroxypropyl)-amin bzw. durch 4,13 g eines mit 4 Mol PO propoxyliertes N-Methyldiethanolamin (PO-N-MDA) als tertiäres Amin ersetzt.

Die Ergebnisse dieser Versuche sind in Tabelle 1 zusammengefaßt.

Tabelle 1

| tertiäres Amin | Viskosität[3]) nach der Herstellung [mPa.s] bei 25° C | Bodensatz siehe[1]) | Emulgierbarkeit [s][2]) | Viskosität [mPa.s] (nach Lagerung bei 80° C) bei 25° C[3]) |
|---|---|---|---|---|
| N-Methyldiethanolamin | 9.800 | nach 24 h vorhanden | <20 | - |
| N-Methyldiisopropanolamin | 14.000 | keiner | < 5 | vernetzt |
| PO-N-MDA | 4.000 | keiner | <15 | >300.000 |

[1]) Im Prepolymer ausgefallene Partikel (beispielsweise kurzkettige Hartsegmente)

[2]) Emulgierbarkeit: Unter intensivem Rühren werden 100 g NCO-Prepolymer und 200 g Wasser bei Raumtemperatur für 30 s vermischt. Als Emulgierbarkeit wird die Zeit in Sekunden angegeben, nach der Phasentrennung oder Koagulation eintritt.

[3]) unter Feuchtigkeitsausschluß

B) nicht erfindungsgemäßes 2 Stufen-Verfahren

Stufe 1: Salzherstellung

In einem Rührgefäß werden 39,5 Tle. N-Methyldiethanolamin auf 80° C erhitzt und 60,5 Tle. p-Toluolsulfonsäuremethylester kontinuierlich so zugegeben, daß bei der stark exothermen Reaktion eine Temperatur von 75 - 85° C erreicht wird.

Stufe 2: NCO-Prepolymer

3,8 Tle. des Salzes aus Stufe 1 werden mit 76 Tle. des Polyethergemischs aus A) bei 80° C entwässert und dann mit 20,2 Tle. TDI (Isomerengemisch 80:20 aus 2,4- und 2,6-Toluylendiisocyanat) bis zum theoretisch berechneten Isocyanatgehalt bei ca. 60-70° C umgesetzt. Die Reaktionstemperatur steigt um ca. 5-10° C Nach Erreichen des theoretischen NCO-Wertes erhält man ein trübes weißgefärbtes Prepolymer.

Nach dem oben beschriebenem Verfahren wurde das N-Methyldiethanolamin durch 1,85 g N-Methyl-di-(2-hydroxypropyl)-amin, bzw. durch 4,13 g eines mit 4 Mol PO propoxyliertes N-Methyldiethanolamin(PO-N-MDA) als tertiäres Amin ersetzt.

Die Ergebnisse dieser Versuche sind in Tabelle 2 zusammengefaßt.

Tabelle 2

| tertiäres Amin | Viskosität 3) nach der Herstellung [mPa.s] bei 25° C | Bodensatz | Emulgierbarkeit [s] |
|---|---|---|---|
| N-Methyldiethanolamin | 4.100 | nach 24 h | <20 |
| N-Methyldiisopropanolamin | 5.500 | nach 24 h | < 5 |
| PO-N-MDA | 3.300 | nach 3 Tagen | <15 |

C) erfindungsgemäßes Dreistufenverfahren:

Stufe 1 Salzherstellung: erfolgt wie unter B)

Stufe 2: Semi-NCO-Prepolymer

Die Salze auf der Basis von N-Methyldiethanolamin und N-Methyldiisopropanolamin sind in der 2. Stufe nicht mehr zu verarbeiten. Die Reaktion mit TDI führt zu festen Produkten.

Zu 85,8 Tle. TDI werden 14,2 Tle. eines Salzes aus Stufe 1 bestehend aus 63,6 Tle. PO-N-MDA und 36,4 Tle. o,p-Toluolsulfonsäuremethylester hinzugefügt, so daß die Temperatur des Reaktionsgemisches 100° C nicht über schreitet. Nach Beendigung der Reaktion (Erreichung des theoretischen Isocyanatgehaltes) entsteht ein bei Raumtemperatur klares und flüssiges Produkt.

Stufe 3: NCO-Prepolymer

76,7 Tle. des Polyethergemisches aus A) werden zu 23,3 Tle. des Semi-NCO-Prepolymers aus Stufe 2 bis zum theoretischen Isocyanatgehalt bei 60-70° C zur Reaktion gebracht. Das transparente NCO-Prepolymer hat eine Viskosität von ca. 6.000 Viskosität bei 25° C gemessen [mPa.s] und hat nach drei Tagen Lagerung bei 80° C eine Viskosität (25° C) von < 8.000 [mPa.s]. Emulgierbarkeit: 90 [s].

Herstellungsbeispiele für PUR-Massen

Als Apparatur dienen zwei Doppelpaddel-Schneckentröge mit einem Fassungsvolumen von jeweils ca, 180 1 und einer Lange von je 300 cm, die hintereinander geschaltet sind (in Reihe), und deren Paddelwellen sich gegenläufig drehen.

Die Produktförderung erfolgt zwangsweise von der Eintragsöffnung in Richtung Austragsöffnung, wobei zwischen den Wellen eine gewisse Knetung und Quetschung des Reaktionsgemisches erfolgt.

72 kg/h Schaumstoff MA 2538 (Hersteller Fa, Metzeler) < 10 mm werden über eine Bandwaage und 148,4 kg/h Braunkohlenstaub (<200 µm) werden über eine Dosierschnecke in den Trichter dosiert.

62,4 kg/h des erfindungsgemäßen NCO-Prepolymerbindemittel (gemäß Beispiel in Verfahren C) werden mit 523 kg/h Wasser in 1,5 1 Stachelmischer gemischt und ebenfalls in den Trichter gegeben. 27,6 kg/h eines zweiten, basischen, mit kristalliner Phosphorsäure stabilisierten NCO-Prepolymeren (EP 151 937) mit einem NCO-Gehalt von ca, 6 %, aufgebaut aus einem hydrophilen, verzweigten Polyether, gestartet auf Trimethylolpropan, umgesetzt mit 40 Teilen Propylenoxid und 60 Teilen Ethylenoxid mit einer OH-Zahl von 26 und N-Methyldiethanolamin und Toluylendiisocyanat (2,4- und 2,6-Isomerengemisch 80:20), werden in das erste Drittel der zweiten Paddelschnecke dosiert.

Die Prepolymere werden über Zahnradpumpe und das Wasser über eine Mengenregelung dosiert.

Die erste Paddelschnecke wird im letzten Drittel, die zweite Schnecke wird komplett mit Schleichdampf

(6 bar) beheizt.

Nach einer Verweilzeit in beiden Schnecken von ca, 5,5 Minuten tritt das intensiv gemischte Produkt mit einer Temperatur von ca, 42 °C aus und wird in einem Trichter mit 5,000 1/h Wasser von 50 °C gemischt und über eine Pumpe und eine Verweilstrecke (Durchmesser 100 mm, Länge 80 m) auf ein Siebfließband gepumpt und in ein gelochtes Faß gefördert.

Die Verweilzeit beträgt ca. 6 Minuten.

Das Produkt ist komplett ausreagiert und kann nach Abtropfen des Überschußwassers abgefüllt werden.

Eigenschaften:

TS/1 Suspension 95-120 g/1, Abrieb im Kugelmühlentest ca. 6 % entspricht den Produkten aus EP 151 937.

**Ansprüche**

1. Verfahren zur Herstellung von schaumstoffhaltigen Polyurethan(harnstoff)-Massen aus Polyisocyanaten, Polyolen, kationische Gruppen tragenden Verbindungen, Füllstoffen, Wasser und Schaumstoffen und Kationengruppen tragende NCO-Prepolymer-Bindemittel, dadurch gekennzeichnet, daß zum Aufbau der NCO-Prepolymere Kationengruppen enthaltende Semi-NCO-Prepolymere auf Basis von Polyisocyanaten und ganz oder teilweise quaternierten tertiären Stickstoff enthaltenden Polyolen mit 3 bis 8 Mol Propylenoxid pro Mol Stickstoff eingesetzt werden.

2. Verfahren nach Anspruch 1, dadurch gekennzeichnet, daß als Polyisocyanatkomponente Tolylendiisocyanatlsomere verwendet werden.

3. Verfahren nach Anspruch 1 oder 2, dadurch gekennzeichnet, daß die quartären Stickstoffatome aufweisenden Polyole mit einem Gehalt von 4 Mol Propylenoxid pro Mol quartärer Stickstoff eingeführt werden.

4. Verfahren nach einem der Ansprüche 1 - 3, dadurch gekennzeichnet, daß als quartäres Stickstoffatome aufweisendes Polyol quarterniertes propoxiliertes N-Methyldiethanolamin verwendet wird.